# EUROPEAN PATENT APPLICATION

(11) **EP 4 851 029 A1**
(43) Date of publication of application: **09.12.2026**
(21) Application number: 26157803.3
(22) Date of filing: 11.02.2026
(51) Int. Cl.: B62J 13/00, B62K 25/28, B62K 11/04, B62K 19/24, B62M 9/00

(54) **STRADDLED VEHICLE**

(30) Priority: 03.06.2025 JP 2025092447
(71) Applicant: Yamaha Hatsudoki Kabushiki Kaisha, Iwata-shi, Shizuoka 438-8501 (JP)
(72) Inventor: NIKAIDO, Kakeru, Iwata-shi, 4388501 (JP); SAKAMOTO, Masahiro, Iwata-shi, 4380026 (JP); TAKAHASHI, Katsunori, Iwata-shi, 4388501 (JP); DEGUCHI, Shogo, Iwata-shi, 4388501 (JP); HARUTA, Katsuya, Iwata-shi, 4388501 (JP)
(74) Representative: Studio Torta S.p.A.

(57) **Abstract**

There is disclosed a motorcycle (1) including a swing arm (8) pivotally connected to a main frame (12) through a pivot shaft (7); a chain (9) to transmit a driving force of an engine (5) to a rear wheel (4); a chain guard (40) to, upon pivoting of the swing arm (8), come into contact with the chain (9), thus limiting upward and downward movement of the chain (9); and a fastening member (30) fastening a seat frame (18) to the main frame (12). The chain guard (40) is assembled to the fastening member (30).

## Description

### Technical field

The present invention relates generally to straddled vehicles, and more particularly, to a straddled vehicle including a chain guard.

### Prior art

A straddled vehicle known in the art includes: a driving source, such as an internal combustion engine; a swing arm pivotably connected to a body frame through a pivot shaft; a rear wheel supported by the swing arm; a chain through which a driving force of the driving source is transmitted to the rear wheel; and a chain guard to limit upward and downward movement of the chain caused by pivoting of the swing arm.

JP H09-226663 A, for example, discloses a motocrosser including a chain roller disposed above a pivot shaft. The motocrosser further includes a fastening boss fixed to a vertical main pipe supporting the pivot shaft. A supporting shaft is fastened to the fastening boss from inside in a vehicle width direction. The chain roller is rotatably assembled to the supporting shaft. According to JP H09-226663 A, the chain roller and other components prevent or reduce, to some extent, the occurrence of violent upward and downward pivoting of a chain and collision of the chain with a swing arm during travel.

For placement of the chain roller, the motocrosser disclosed in JP H09-226663 A requires preliminarily fixing the dedicated fastening boss to the vertical main pipe, fastening a seat frame, which supports a seat, to the vertical main pipe, and then fastening the supporting shaft, which supports the chain roller, to the fastening boss. Thus, this motocrosser involves a chain guard assembly operation that is not necessarily easy to perform.

Accordingly, embodiments of the present invention provide straddled vehicles each of which allows attachment of a chain guard through a simpler assembly operation.

### Description of the invention

An embodiment of the present invention disclosed herein provides a straddled vehicle that includes a body frame including: a main frame extending rearward and downward from a head pipe; and a seat frame fastened to the main frame and extending rearward and upward. The straddled vehicle further includes: a driving source supported by the main frame and including an output shaft to output a driving force; a swing arm pivotally connected to the main frame through a pivot shaft; a rear wheel rotatably connected to the swing arm; a chain coupled to the output shaft and the rear wheel and configured to transmit the driving force of the driving source to the rear wheel; a chain guard including a guard member configured to, upon pivoting of the swing arm, come into contact with the chain, thus limiting upward and downward movement of the chain; and a fastening member fastening the seat frame to the main frame. The chain guard is assembled to the fastening member.

The straddled vehicle includes the chain guard assembled to the fastening member fastening the seat frame to the main frame. Thus, a dedicated component to support the chain guard does not need to be connected to the main frame or the seat frame. Consequently, the straddled vehicle allows attachment of the chain guard through a simpler assembly operation.

The fastening member may be shaft-shaped. The guard member may be a roller rotatable around an axis of the fastening member.

The chain circulates during travel of the straddled vehicle. Accordingly, the guard member rotates upon contact of the circulating chain with the guard member. Consequently, this reduces or prevents wearing away of the guard member caused by the chain.

The fastening member may include a chain guard supporting shaft portion including a smooth outer peripheral surface. The guard member may be a roller rotatably supported by the chain guard supporting shaft portion.

This arrangement allows the guard member to be directly supported by the fastening member and thus does not require a bearing and/or other component(s) to support the guard member such that the guard member is rotatable. Accordingly, this arrangement results in a reduction in the number of components and a reduction in the weight of the chain guard.

The fastening member may include a large-diameter shaft portion having an outer diameter larger than an outer diameter of the chain guard supporting shaft portion. The large-diameter shaft portion and the chain guard supporting shaft portion may be continuous with each other in an axial direction of the fastening member. The roller may have a cylindrical shape having an inner diameter larger than or equal to the outer diameter of the chain guard supporting shaft portion and smaller than the outer diameter of the large-diameter shaft portion.

In this arrangement, the inner diameter of the roller is smaller than the outer diameter of the large-diameter shaft portion. Thus, the large-diameter shaft portion restricts movement of the roller from the chain guard supporting shaft portion to the large-diameter shaft portion. Consequently, this arrangement is able to limit or prevent positional deviation of the roller.

The fastening member may include a pin attachment shaft portion provided with a pin hole extending through the fastening member in a radial direction thereof. The large-diameter shaft portion, the chain guard supporting shaft portion, and the pin attachment shaft portion may be continuous with each other in this order in the axial direction of the fastening member. The straddled vehicle may further include a pin inserted through the pin hole.

In this arrangement, the pin restricts movement of the roller from the chain guard supporting shaft portion to the pin attachment shaft portion. Consequently, positional deviation of the roller is limitable or preventable with a simple structure.

The fastening member may include: a male threaded portion including an outer peripheral surface provided with a spiral groove; and a chain guard supporting shaft portion including a smooth outer peripheral surface. One of the seat frame and the main frame may be provided with a through hole through which the male threaded portion passes, and the other one of the seat frame and the main frame may be provided with a female threaded portion screwed to the male threaded portion. The guard member may be rotatably supported by the chain guard supporting shaft portion.

The chain guard supporting shaft portion may be disposed inward in a vehicle width direction relative to the male threaded portion.

In this arrangement, the guard member is disposed inward in the vehicle width direction relative to the main frame and the seat frame. Accordingly, this arrangement is able to, upon upward and downward pivoting of the swing arm, effectively prevent the chain from coming into contact with a vehicle component disposed inward in the vehicle width direction relative to the main frame and the seat frame.

The fastening member may consist of a bolt that includes a bolt head and a bolt shaft extending in a vehicle width direction from the bolt head. The bolt head may be larger in outer diameter than the bolt shaft. The bolt head may be located outward in the vehicle width direction relative to the bolt shaft.

This arrangement allows the bolt, which is the fastening member, to be tightened from outside in the vehicle width direction. Accordingly, this arrangement enables tightening of the bolt without being interfered by a vehicle component disposed inward in the vehicle width direction.

The straddled vehicle may further include a rear suspension unit connected to the body frame and the swing arm. The guard member may overlap with the rear suspension unit in a vehicle plan view.

In this arrangement, the chain guard is able to prevent contact of the chain with the rear suspension unit upon upward and downward movement of the chain.

The straddled vehicle may further include a rear suspension unit connected to the body frame and the swing arm. The guard member may overlap with the rear suspension unit in a vehicle side view.

The chain guard may include: a supporting shaft supporting the guard member such that the guard member is rotatable; and a bracket to which the supporting shaft is fixed. The bracket may be assembled to the fastening member.

This arrangement allows the guard member to be disposed at any desired location by adjusting the shape and size of the bracket. This arrangement thus allows the guard member to be disposed, for example, in consideration of the location of a vehicle component with which the chain is required to avoid contact. Consequently, this arrangement makes it possible to suitably prevent contact of the chain with the vehicle component.

Various embodiments of the present invention provide straddled vehicles each of which allows attachment of a chain guard through a simpler assembly operation.

### Brief description of the drawings

Fig. 1 is a left side view of a motorcycle according to a first embodiment of the present invention.
Fig. 2 is a left side view of a body frame.
Fig. 3 is a left side view of a swing arm, a chain, and other components when a rear wheel is located at a normal position.
Fig. 4 is a left side view of the swing arm, the chain, and other components when the rear wheel has moved upward.
Fig. 5 is a perspective view of a chain guard according to the first embodiment.
Fig. 6 is a cross-sectional view of the chain guard according to the first embodiment.
Fig. 7 is a rear view of the chain guard, a rear suspension unit, and other components.
Fig. 8 is a top view of the chain guard, the rear suspension unit, and other components.
Fig. 9 is a right side view of the chain guard.
Fig. 10 is a perspective view of a chain guard according to a second embodiment of the present invention.
Fig. 11 is a cross-sectional view of the chain guard according to the second embodiment.

### Embodiments of the invention

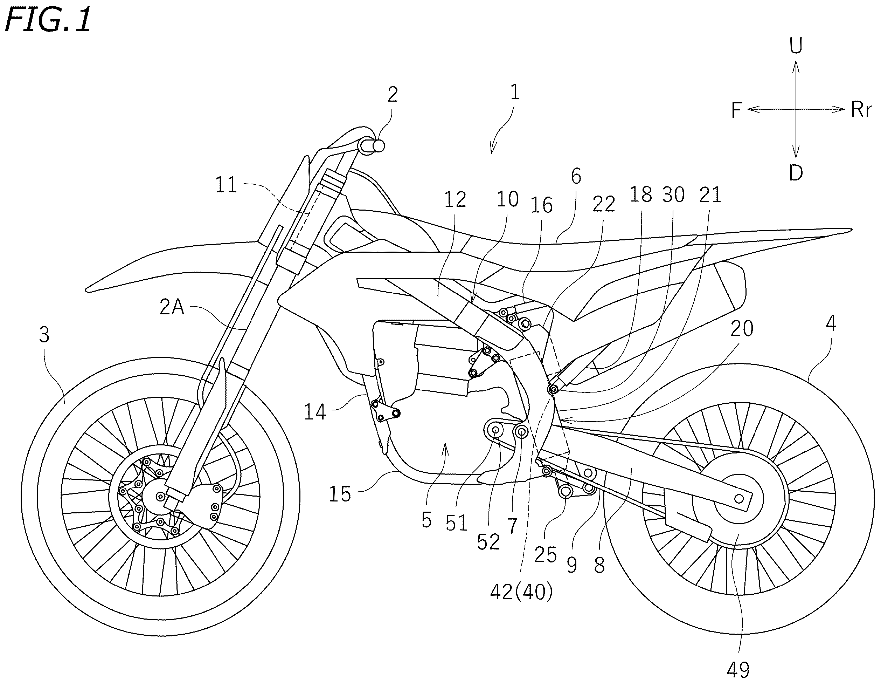

Embodiments of straddled vehicles according to the present invention will be described below with reference to the drawings. As illustrated in Fig. 1, a straddled vehicle according to any one of the embodiments described below is an off-road motorcycle 1. The motorcycle 1 is a "motocrosser".

The following description is based on the assumption that unless otherwise specified, the terms "front", "rear", "left", "right", "up", and "down" respectively refer to front, rear, left, right, up, and down from the perspective of a virtual rider sitting on a seat 6 when the motorcycle 1 with no rider or luggage thereon is stationary in an upright position on a horizontal plane. The reference signs "F", "Rr", "L", "R", "U", and "D" in the drawings respectively represent front, rear, left, right, up, and down.

### First Embodiment

As illustrated in Fig. 1, the motorcycle 1 includes: a body frame 10; a handlebar 2; a front wheel 3; a rear wheel 4; the seat 6 supported by the body frame 10; an internal combustion engine 5 (hereinafter referred to as an "engine 5") supported by the body frame 10; a swing arm 8; and a rear suspension unit 20.

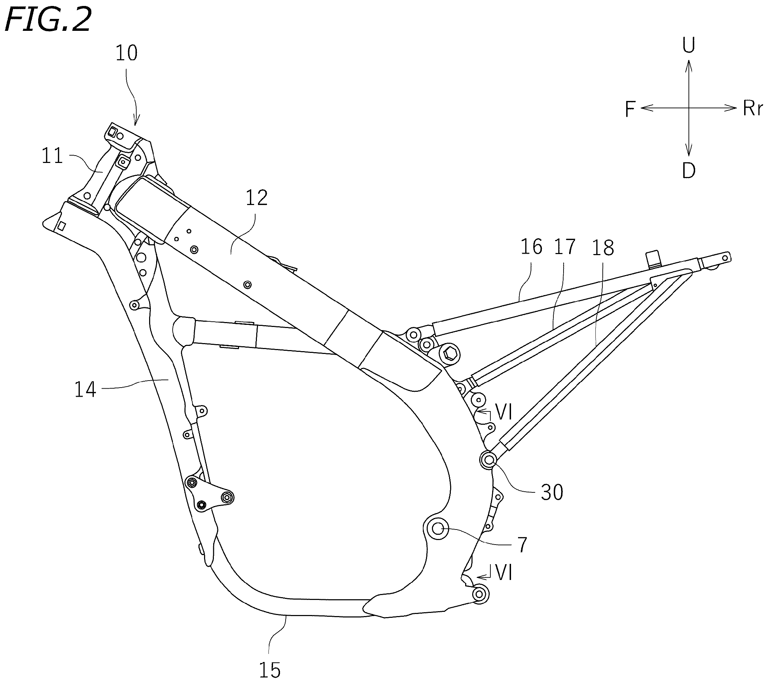

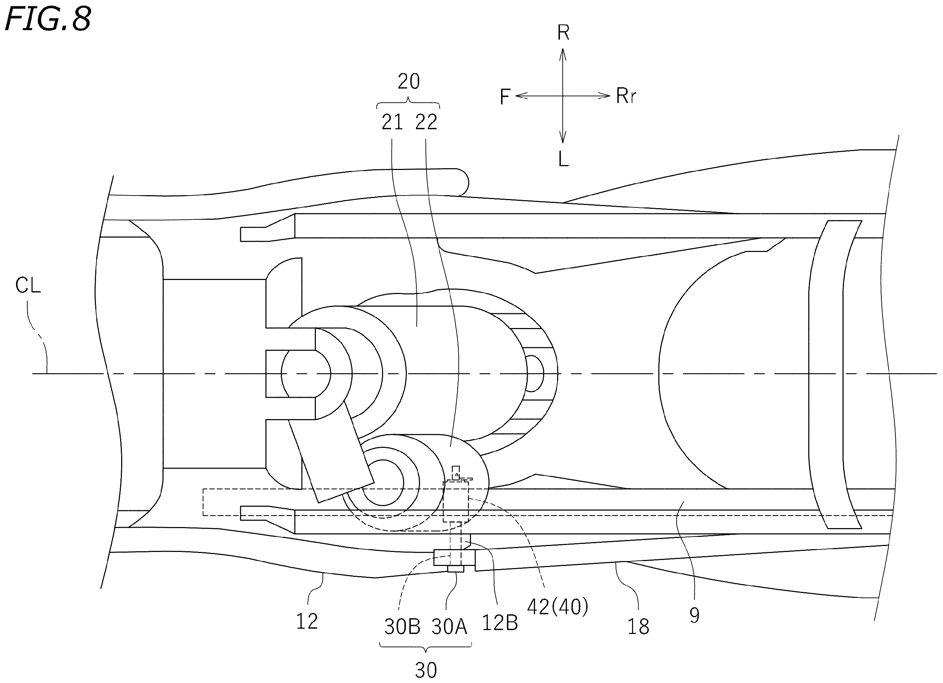

As illustrated in Fig. 2, the body frame 10 includes a head pipe 11, a left main frame 12 (which may hereinafter be simply referred to as a "main frame 12"), a down frame 14, a lower frame 15, and seat frames 16, 17, and 18. The main frame 12 extends rearward and downward from the head pipe 11. The down frame 14 extends rearward and downward from the head pipe 11 and is disposed below the main frame 12. The lower frame 15 extends rearward. A front end portion of the lower frame 15 is connected to a lower end portion of the down frame 14. A rear end portion of the lower frame 15 is connected to a lower end portion of the main frame 12. The seat frames 16, 17, and 18 each extend rearward and upward. The seat frames 16 are provided as a left-right pair. The seat frame 17 is disposed rightward relative to a vehicle central line CL (see Fig. 8). The seat frame 18 is disposed leftward relative to the vehicle central line CL. The body frame 10 further includes a right main frame (which is not illustrated in Fig. 2). Front end portions of the left seat frame 16 and the seat frame 18 are each fastened to the left main frame 12. Front end portions of the right seat frame 16 and the seat frame 17 are each fastened to the right main frame. The seat frames 16 are disposed above the seat frame 17. The seat frame 17 is disposed above the seat frame 18. The seat frame 18 is the lowermost one of the seat frames. A rear end portion of the seat frame 17 is connected to a rear portion of the right seat frame 16. A rear end portion of the seat frame 18 is connected to a rear portion of the left seat frame 16.

A steering shaft (not illustrated) is inserted into the head pipe 11. The steering shaft is supported by the head pipe 11 so as to be rotatable to the right and left. As illustrated in Fig. 1, the handlebar 2 is connected to an upper portion of the steering shaft and is disposed above the head pipe 11. A front fork 2A is connected to a lower portion of the steering shaft. The front wheel 3 is rotatably connected to a lower end portion of the front fork 2A.

A pivot shaft 7 is connected to the main frame 12. The pivot shaft 7 connects a front end portion of the swing arm 8 to the main frame 12. Through the pivot shaft 7, the swing arm 8 is connected to the main frame 12 so as to be pivotable upward and downward relative to the main frame 12. The rear wheel 4 is rotatably connected to a rear end portion of the swing arm 8.

The engine 5 is an example of a "driving source" that outputs a driving force for travel. The engine 5 includes an output shaft 51 to output a driving force. A sprocket 52 is fixed to the output shaft 51. The rear wheel 4 is coupled to the engine 5 through a chain 9. Specifically, the rear wheel 4 includes a sprocket 49, and the chain 9 in an endless form is wound around the sprocket 49 of the rear wheel 4 and the sprocket 52 of the engine 5. The driving force generated by the engine 5 is transmitted to the rear wheel 4 through the chain 9.

The rear suspension unit 20 is connected to the body frame 10 and the swing arm 8. The rear suspension unit 20 serves to absorb an impact applied to the rear wheel 4 from a road surface. The rear suspension unit 20 includes: a suspension body 21 including a damper and a spring (which are not illustrated); and a sub-tank 22 from which oil is to be supplied to the damper or into which oil is to be collected from the damper. Although not illustrated, an upper portion of the rear suspension unit 20 is connected to the main frame 12. A lower portion of the rear suspension unit 20 is connected to the swing arm 8 through a link mechanism 25.

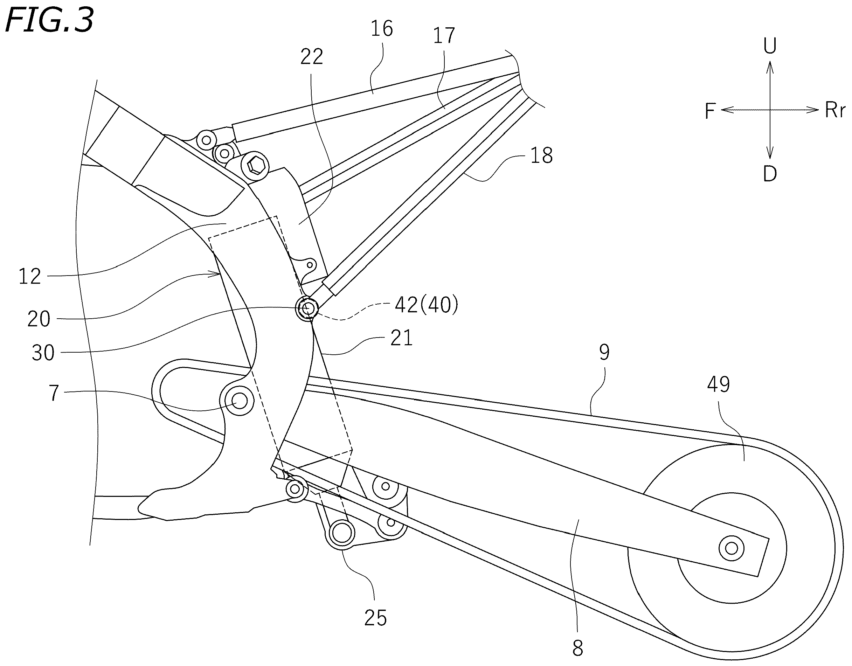

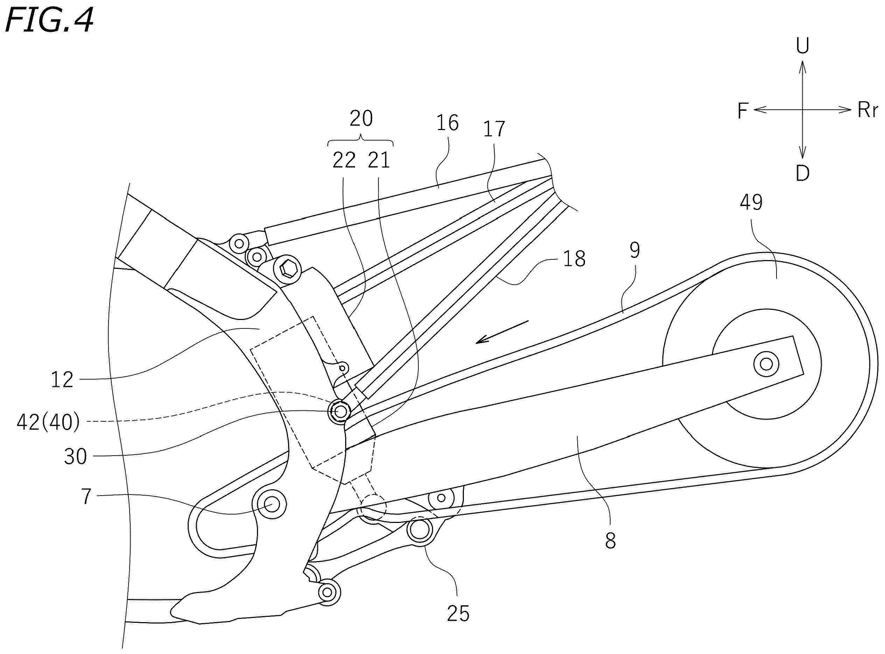

During travel of the motorcycle 1, irregularities (such as bumps and dips) of a road surface causes the rear wheel 4 to move upward and downward. With the upward and downward movement of the rear wheel 4, the swing arm 8 pivots upward and downward around the pivot shaft 7. This may result in a temporary upward movement of the chain 9. A large upward movement of the rear wheel 4, for example, may lead to a transition from a state in which the center of the rear wheel 4 is located below the center of the pivot shaft 7 (see Fig. 3) to a state in which the center of the rear wheel 4 is located above the center of the pivot shaft 7 (see Fig. 4). This transition results in a large upward movement of the chain 9 as illustrated in Fig. 4. Upon large upward movement of the chain 9, the chain 9 may come into contact with a vehicle component, such as the rear suspension unit 20. Accordingly, the motorcycle 1 according to the present embodiment includes a chain guard 40 to limit upward and downward movement of the chain 9 so as to prevent the chain 9 from coming into contact with the vehicle component.

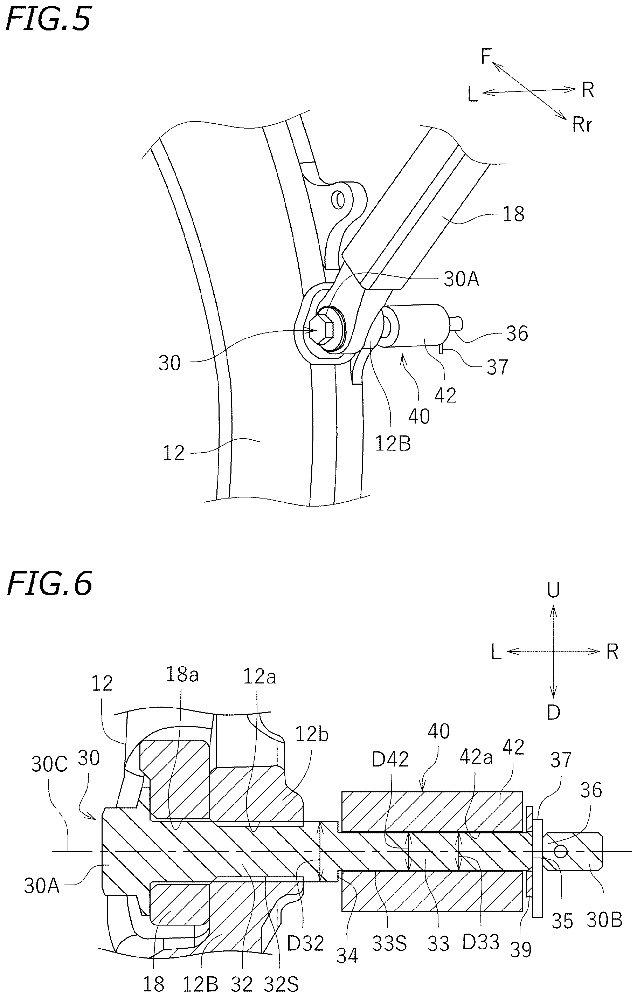

As illustrated in Fig. 5, the seat frame 18 is fastened to the main frame 12 with a bolt 30. The chain guard 40 is assembled to the bolt 30.

Fig. 6 is a vertical cross-sectional view of the bolt 30 taken along the line VI-VI in Fig. 2. As illustrated in Fig. 6, the bolt 30 includes a bolt head 30A and a bolt shaft 30B extending in a vehicle width direction from the bolt head 30A. The bolt head 30A is larger in outer diameter than the bolt shaft 30B. The bolt head 30A is configured to allow a tool to come into engagement therewith. The bolt head 30A is thus configured to receive a rotative force from the tool. In the present embodiment, the bolt head 30A has a polygonal (e.g., hexagonal) cross-sectional shape (see Fig. 5) so as to allow the tool, such as a wrench, to come into engagement therewith. The bolt head 30A is located outward in the vehicle width direction relative to the bolt shaft 30B. As used herein, the term "outward in the vehicle width direction" refers to a direction away from the vehicle central line CL (see Fig. 8) in a vehicle plan view, and the term "inward in the vehicle width direction" refers to a direction toward the vehicle central line CL in the vehicle plan view. In this embodiment, the bolt head 30A is located leftward relative to the bolt shaft 30B.

The bolt shaft 30B includes a male threaded portion 32 and a chain guard supporting shaft portion 33. The chain guard supporting shaft portion 33 is disposed inward in the vehicle width direction relative to the male threaded portion 32. The male threaded portion 32 includes an outer peripheral surface 32S provided with a spiral groove. The chain guard supporting shaft portion 33 includes a smooth outer peripheral surface 33S. The seat frame 18 is provided with a through hole 18a through which the male threaded portion 32 passes. The through hole 18a includes a smooth inner peripheral surface. The main frame 12 includes a bracket 12B. The bracket 12B is provided with a female threaded portion 12b screwed to the male threaded portion 32. The female threaded portion 12b is provided with a through hole 12a defined by an inner peripheral surface of the female threaded portion 12b provided with a spiral groove.

The bolt 30 is a "stepped bolt". The male threaded portion 32 and the chain guard supporting shaft portion 33 are continuous with each other in an axial direction of the bolt 30. An outer diameter D32 of the male threaded portion 32 is larger than an outer diameter D33 of the chain guard supporting shaft portion 33. The male threaded portion 32 is an example of a "large-diameter shaft portion". A step 34 is formed at an interface between the male threaded portion 32 and the chain guard supporting shaft portion 33.

The chain guard 40 according to the present embodiment includes a roller 42 rotatably supported by the chain guard supporting shaft portion 33. The roller 42 is an example of a "guard member". The roller 42 has a cylindrical shape with a central hole 42a. The chain guard supporting shaft portion 33 passes through the central hole 42a of the roller 42. An inner diameter D42 of the central hole 42a is larger than or equal to the outer diameter D33 of the chain guard supporting shaft portion 33 and is smaller than the outer diameter D32 of the male threaded portion 32. Thus, the following expression holds: D33 ≤ D42 < D32. Accordingly, a left end face of the roller 42 abuts against the step 34 of the bolt shaft 30B. The step 34 restricts leftward movement of the roller 42. The roller 42 may be made of any suitable material. Urethane rubber, for example, may suitably be used as a material for the roller 42.

The bolt 30 includes a pin attachment shaft portion 36 provided with a pin hole 35. The pin attachment shaft portion 36 is located inward in the vehicle width direction relative to the chain guard supporting shaft portion 33. In this embodiment, the pin attachment shaft portion 36 is located rightward of the chain guard supporting shaft portion 33. The pin hole 35 is a through hole extending in a radial direction of the bolt shaft 30B. In other words, the pin hole 35 is a through hole extending in a direction perpendicular or substantially perpendicular to an axis 30C of the bolt 30. A pin 37 is inserted through the pin hole 35. In this embodiment, the pin 37 is a "split pin". The pin 37 is disposed rightward of the roller 42. A washer 39 is provided between the roller 42 and the pin 37. The pin 37 restricts rightward movement of the roller 42. As mentioned above, the step 34 of the bolt shaft 30B restricts leftward movement of the roller 42. In the present embodiment, the pin 37 and the step 34 of the bolt shaft 30B prevent positional deviation of the roller 42.

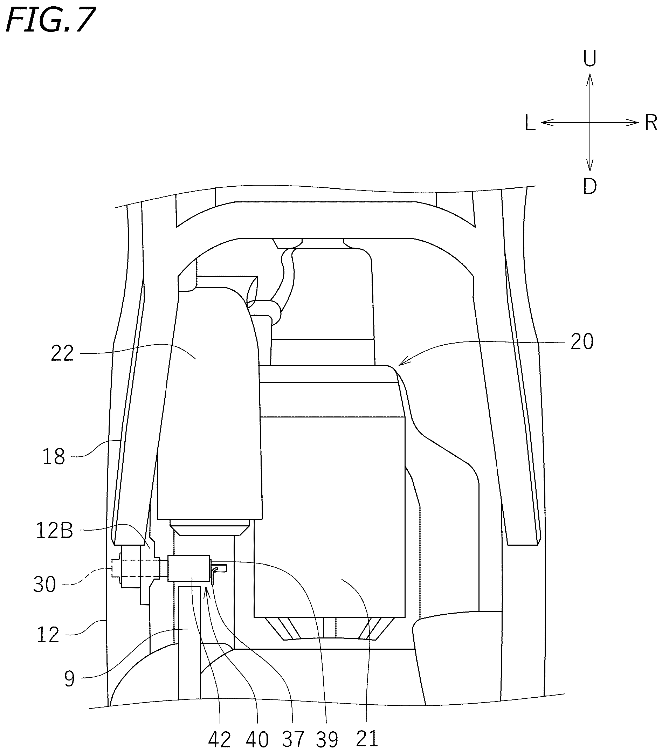

As illustrated in Fig. 7, the roller 42 is disposed over the chain 9. The roller 42 is disposed under the sub-tank 22 of the rear suspension unit 20. The roller 42 is disposed leftward of the suspension body 21 of the rear suspension unit 20.

As illustrated in Fig. 8, the roller 42 is disposed to overlap with the chain 9 in the vehicle plan view. In the vehicle plan view, the roller 42 is disposed to overlap with the rear suspension unit 20. In this embodiment, the roller 42 overlaps with the sub-tank 22 of the rear suspension unit 20 in the vehicle plan view.

As illustrated in Fig. 1, the roller 42 overlaps with the rear suspension unit 20 in a vehicle side view. In this embodiment, the roller 42 overlaps with the suspension body 21 of the rear suspension unit 20 in the vehicle side view.

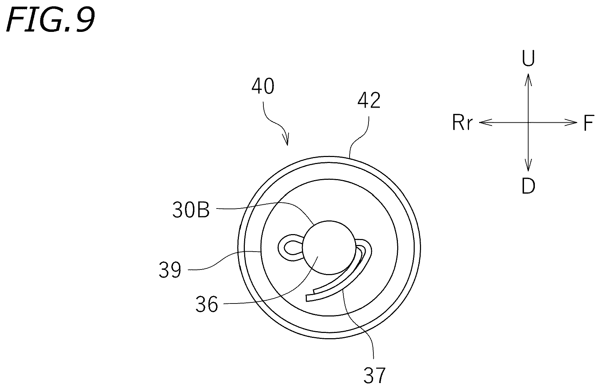

The chain guard 40 is attachable to the bolt 30 in a procedure described below. First, the through hole 18a of the seat frame 18 is brought into alignment with the through hole 12a of the bracket 12B of the main frame 12 such that the seat frame 18 overlaps with the bracket 12B. Then, the bolt 30 is inserted into the through holes 18a and 12a from outside to inside in the vehicle width direction. This process involves screwing the male threaded portion 32 of the bolt 30 to the female threaded portion 12b of the bracket 12B. The seat frame 18 is thus fastened to the main frame 12. Subsequently, the roller 42 is fitted onto the chain guard supporting shaft portion 33 of the bolt 30 from inside to outside in the vehicle width direction. Then, the pin 37 is inserted into the pin hole 35 of the bolt 30, and a portion of the pin 37 is bent with a tool, such as a pair of pliers (see Fig. 9). As a result, the pin 37 is fixed to the pin attachment shaft portion 36 of the bolt 30 and prevented from coming out of the pin hole 35. Performing the procedure just described enables the chain guard 40 to be assembled to the bolt 30 fastening the seat frame 18 to the main frame 12.

As illustrated in Fig. 4, during travel of the motorcycle 1, the swing arm 8 may pivot around the pivot shaft 7, which may result in a temporary large upward movement of the chain 9. In the present embodiment, the chain guard 40 is disposed between the chain 9 and the sub-tank 22 of the rear suspension unit 20. Upon upward movement of the chain 9, the chain 9 comes into contact with the roller 42 of the chain guard 40. Consequently, the chain 9 avoids coming into contact with the sub-tank 22.

During travel of the motorcycle 1, the chain 9 circulates between the sprocket 52 of the engine 5 and the sprocket 49 of the rear wheel 4 (see the arrow in Fig. 4). Upon contact of the chain 9 with the roller 42, the roller 42 receives not only an upward impact force but also a forward friction force from the chain 9. Because the roller 42 is rotatably supported by the bolt 30, the roller 42 rotates around the axis 30C of the bolt 30 upon receiving the forward friction force from the chain 9. In other words, upon contact of the chain 9 with the roller 42, the roller 42 rotates in response to the circulation of the chain 9. Consequently, this reduces wearing away of the roller 42 caused by the chain 9.

As described above, the chain guard 40 according to the present embodiment is assembled to the bolt 30, which is a fastening member fastening the seat frame 18 to the main frame 12. Thus, a dedicated component to support the chain guard 40 does not need to be connected (e.g., welded) to the main frame 12 or the seat frame 18. Consequently, the present embodiment enables attachment of the chain guard 40 through a simpler assembly operation.

The chain guard 40 includes the roller 42 rotatable around the axis 30C of the bolt 30. Upon contact of the chain 9 with the roller 42, the roller 42 rotates in response to the circulation of the chain 9. This enables a reduction in the wearing away of the roller 42 caused by the chain 9. Consequently, the present embodiment is able to enhance the durability of the chain guard 40.

As illustrated in Fig. 6, the bolt 30 includes the chain guard supporting shaft portion 33 including the smooth outer peripheral surface 33S. The roller 42 is rotatably supported by the chain guard supporting shaft portion 33. Because the roller 42 is directly supported by the bolt 30 as just described, the present embodiment does not require a bearing and/or other component(s) to support the roller 42 such that the roller 42 is rotatable. This results in a reduction in the number of components of the chain guard 40 and a reduction in the weight of the chain guard 40. Because the bearing and/or other component(s) are/is unnecessary, the present embodiment allows the roller 42 to have a small outer diameter. Because the roller 42 is allowed to have a small outer diameter, the roller 42 and the sub-tank 22 would not come into contact with each other if the bolt 30 and the sub-tank 22 of the rear suspension unit 20 are located close to each other. Accordingly, the present embodiment allows the roller 42 to be disposed close to the sub-tank 22 (see Fig. 7).

As illustrated in Fig. 6, the bolt 30 according to the present embodiment is a stepped bolt. The outer diameter D32 of the male threaded portion 32 is larger than the outer diameter D33 of the chain guard supporting shaft portion 33. The inner diameter D42 of the roller 42 is smaller than the outer diameter D32 of the male threaded portion 32. Thus, the step 34 between the chain guard supporting shaft portion 33 and the male threaded portion 32 restricts leftward movement of the roller 42. Consequently, the present embodiment is able to limit or prevent leftward positional deviation of the roller 42 by using the bolt 30 without requiring any additional components.

As illustrated in Fig. 6, the bolt 30 includes the pin attachment shaft portion 36 located rightward of the roller 42, and the pin 37 is attached to the pin attachment shaft portion 36. The washer 39 is provided between the roller 42 and the pin 37. The pin 37 restricts rightward movement of the washer 39. The washer 39 restricts rightward movement of the roller 42. The present embodiment is thus able to restrict rightward movement of the roller 42 by using the pin 37. Consequently, the present embodiment is able to limit or prevent positional deviation of the roller 42 with a simple structure.

In the present embodiment, the chain guard supporting shaft portion 33 is disposed inward in the vehicle width direction relative to the male threaded portion 32. Similarly to the rear suspension unit 20, the roller 42 is disposed inward in the vehicle width direction relative to the seat frame 18 and the main frame 12. Accordingly, when the chain 9 moves upward, the roller 42 is able to effectively prevent contact of the chain 9 with the rear suspension unit 20.

As illustrated in Fig. 6, the bolt head 30A of the bolt 30 is located outward in the vehicle width direction relative to the bolt shaft 30B. The present embodiment thus allows the bolt 30 to be tightened from outside in the vehicle width direction. In one example, the bolt 30 may be tightened by rotating the bolt head 30A with a tool, such as a hexagonal wrench, at a position outward in the vehicle width direction relative to the seat frame 18 and the main frame 12. Accordingly, the present embodiment enables facilitating tightening of the bolt 30 without being interfered by a vehicle component (e.g., the rear suspension unit 20) disposed inward in the vehicle width direction relative to the seat frame 18 and the main frame 12.

As illustrated in Fig. 8, the chain 9 overlaps with the rear suspension unit 20 (or more specifically, the sub-tank 22) in the vehicle plan view. Upward movement of the chain 9 may result in unintended contact of the chain 9 with the rear suspension unit 20. In the present embodiment, however, the roller 42 of the chain guard 40 overlaps with the rear suspension unit 20 (or more specifically, the sub-tank 22) in the vehicle plan view. Accordingly, the chain guard 40 is able to effectively prevent contact of the chain 9 with the rear suspension unit 20.

### Second Embodiment

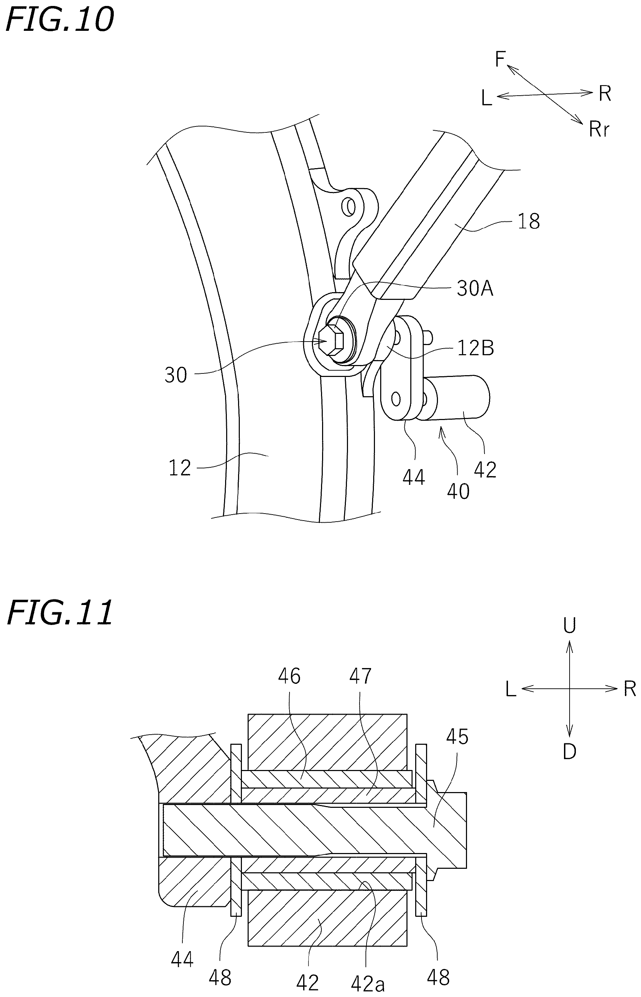

In the first embodiment, the roller 42 is directly assembled to the bolt 30. Alternatively, the roller 42 may be indirectly assembled to the bolt 30. As illustrated in Fig. 10, for example, the roller 42 may be assembled to the bolt 30 through a bracket 44.

In the following description of a second embodiment of the present invention, components and elements similar to those in the first embodiment will be identified by the same reference signs, and their description will be omitted. In the second embodiment illustrated in Fig. 10, the bracket 44 is fixed to the chain guard supporting shaft portion 33 (see Fig. 6) of the bolt 30. The bracket 44 is provided with a hole into which the chain guard supporting shaft portion 33 is inserted. The bracket 44 is non-rotatably fixed to the chain guard supporting shaft portion 33. Any suitable structure may be used to non-rotatably fix the bracket 44 to the chain guard supporting shaft portion 33. In one example, the outer peripheral surface 33S of the chain guard supporting shaft portion 33 may be provided with a spiral groove, an inner peripheral surface of the hole of the bracket 44 may be provided with a spiral groove, and the chain guard supporting shaft portion 33 may be screwed to the bracket 44. Similarly to the first embodiment, the second embodiment involves passage of the male threaded portion 32 of the bolt 30 through the seat frame 18 and the bracket 12B of the main frame 12, and screwing of the male threaded portion 32 to the bracket 12B.

As illustrated in Fig. 11, a bolt 45 is fixed to the bracket 44. A cylindrical collar 46 is disposed around the bolt 45. A bushing 47 is disposed between the collar 46 and the bolt 45. The roller 42 has a cylindrical shape. The bolt 45, the bushing 47, and the collar 46 pass through the central hole 42a of the roller 42. A washer 48 is disposed on the left of the bushing 47, and another washer 48 is disposed on the right of the bushing 47. The roller 42 is rotatably supported by the bolt 45 through the bushing 47 and the collar 46.

In the present embodiment, the chain guard 40 includes the bracket 44, the bolt 45, the collar 46, the bushing 47, and the washers 48. The bracket 44, the bolt 45, the collar 46, the bushing 47, and the washers 48 may be preliminarily assembled to each other before the bracket 44 is fixed to the bolt 30. The bolt 45 is an example of a "supporting shaft" supporting the roller 42 such that the roller 42 is rotatable.

Also in the present embodiment, the chain guard 40 is assembled to the bolt 30 fastening the seat frame 18 to the main frame 12 (see Fig. 10). Because the bracket 44 is assembled to the bolt 30, the present embodiment does not require welding of the bracket 44 to the main frame 12 or the seat frame 18. Also in the present embodiment, a dedicated component to support the roller 42 does not need to be connected to the main frame 12 or the seat frame 18 in addition to tightening of the bolt 30. Consequently, the present embodiment enables attachment of the chain guard 40 by performing a simpler assembly operation.

The present embodiment allows the roller 42 to be disposed at any desired location by appropriately adjusting the shape and size of the bracket 44. The present embodiment thus allows the roller 42 to be disposed at any desired location shifted from the axis of the bolt 30. The present embodiment allows the roller 42 to be disposed, for example, in consideration of the location of a vehicle component with which the chain 9 is required to avoid contact. Consequently, the present embodiment makes it possible to suitably prevent contact of the chain 9 with the vehicle component.

The embodiments of the straddled vehicles have been described above. The embodiments described above, however, are provided by way of example only. Various other embodiments of the straddled vehicles are possible.

In the first embodiment, the roller 42 is directly supported by the bolt 30. Alternatively, the roller 42 may be indirectly supported by the bolt 30 through the bushing 47 and other components as in the second embodiment. In the second embodiment, the bushing 47 and the collar 46 may be omitted such that the roller 42 is directly supported by the bolt 45.

In the first and second embodiments, the seat frame 18 is located outward in the vehicle width direction relative to the bracket 12B of the main frame 12, and the female threaded portion 12b screwed to the male threaded portion 32 of the bolt 30 is provided on the bracket 12B of the main frame 12. Alternatively, the seat frame 18 may be located inward in the vehicle width direction relative to the bracket 12B of the main frame 12, and a female threaded portion screwed to the male threaded portion 32 of the bolt 30 may be provided on the seat frame 18.

The bolt 30 is not limited to a stepped bolt. The bolt shaft 30B may have a constant outer diameter.

The motorcycle 1 is not limited to a motocrosser but may be a motorcycle of any other type. As used herein, the term "straddled vehicle" refers to a vehicle that a rider straddles to ride. The term "straddled vehicle" used herein is not limited to the motorcycle 1. The term "straddled vehicle" used herein may refer to, for example, a motor tricycle, an all-terrain vehicle (ATV), or a snowmobile.

### REFERENCE SIGNS LIST

- 1: motorcycle (straddled vehicle)
- 4: rear wheel
- 5: engine (driving source)
- 7: pivot shaft
- 8: swing arm
- 9: chain
- 10: body frame
- 11: head pipe
- 12: main frame
- 12b: female threaded portion
- 18: seat frame
- 18a: through hole
- 20: rear suspension unit
- 21: suspension body
- 22: sub-tank
- 30: bolt (fastening member)
- 30A: bolt head
- 30B: bolt shaft
- 32: male threaded portion (large-diameter shaft portion)
- 33: chain guard supporting shaft portion
- 35: pin hole
- 36: pin attachment shaft portion
- 37: pin
- 40: chain guard
- 42: roller (guard member)
- 44: bracket
- 45: bolt (supporting shaft)
- 51: output shaft

## Claims

1. A straddled vehicle (1) comprising:
a body frame (10) including
a main frame (12) extending rearward and downward from a head pipe (11), and
a seat frame (18) fastened to the main frame (12) and extending rearward and upward;
a driving source (5) supported by the main frame (12) and including an output shaft (51) to output a driving force;
a swing arm (8) pivotally connected to the main frame (12) through a pivot shaft (7);
a rear wheel (4) rotatably connected to the swing arm (8);
a chain (9) coupled to the output shaft (51) and the rear wheel (4) and configured to transmit the driving force of the driving source (5) to the rear wheel (4);
a chain guard (40) including a guard member (42) configured to, upon pivoting of the swing arm (8), come into contact with the chain (9), thus limiting upward and downward movement of the chain (9); and
a fastening member (30) fastening the seat frame (18) to the main frame (12), wherein
the chain guard (40) is assembled to the fastening member (30).

2. The straddled vehicle (1) according to claim 1, wherein
the fastening member (30) is shaft-shaped, and
the guard member (42) is a roller rotatable around an axis of the fastening member (30).

3. The straddled vehicle (1) according to claim 1, wherein
the fastening member (30) includes a chain guard supporting shaft portion (33) including a smooth outer peripheral surface (33S), and
the guard member (42) is a roller rotatably supported by the chain guard supporting shaft portion (33).

4. The straddled vehicle (1) according to claim 3, wherein
the fastening member (30) includes a large-diameter shaft portion (32) having an outer diameter (D32) larger than an outer diameter (D33) of the chain guard supporting shaft portion (33),
the large-diameter shaft portion (32) and the chain guard supporting shaft portion (33) are continuous with each other in an axial direction of the fastening member (30), and
the roller has a cylindrical shape having an inner diameter (D42) larger than or equal to the outer diameter (D33) of the chain guard supporting shaft portion (33) and smaller than the outer diameter (D32) of the large-diameter shaft portion (32).

5. The straddled vehicle (1) according to claim 4, wherein
the fastening member (30) includes a pin attachment shaft portion (36) provided with a pin hole (35) extending through the fastening member (30) in a radial direction thereof,
the large-diameter shaft portion (32), the chain guard supporting shaft portion (33), and the pin attachment shaft portion (36) are continuous with each other in this order in the axial direction of the fastening member (30), and
the straddled vehicle (1) further comprises a pin (37) inserted through the pin hole (35).

6. The straddled vehicle (1) according to claim 1, wherein
the fastening member (30) includes
a male threaded portion (32) including an outer peripheral surface (32S) provided with a spiral groove, and
a chain guard supporting shaft portion (33) including a smooth outer peripheral surface (33S),
one of the seat frame (18) and the main frame (12) is provided with a through hole (18a) through which the male threaded portion (32) passes,
the other one of the seat frame (18) and the main frame (12) is provided with a female threaded portion (12b) screwed to the male threaded portion (32), and
the guard member (42) is rotatably supported by the chain guard supporting shaft portion (33).

7. The straddled vehicle (1) according to any one of claims 3 to 5, wherein
the fastening member (30) includes a male threaded portion (32) including an outer peripheral surface (32S) provided with a spiral groove,
one of the seat frame (18) and the main frame (12) is provided with a through hole (18a) through which the male threaded portion (32) passes,
the other one of the seat frame (18) and the main frame (12) is provided with a female threaded portion (12b) screwed to the male threaded portion (32), and
the guard member (42) is rotatably supported by the chain guard supporting shaft portion (33).

8. The straddled vehicle (1) according to claim 6 or 7, wherein
the chain guard supporting shaft portion (33) is disposed inward in a vehicle width direction relative to the male threaded portion (32).

9. The straddled vehicle (1) according to any one of claims 1 to 8, wherein
the fastening member (30) consists of a bolt that includes a bolt head (30A) and a bolt shaft (30B) extending in a vehicle width direction from the bolt head (30A),
the bolt head (30A) is larger in outer diameter than the bolt shaft (30B), and
the bolt head (30A) is located outward in the vehicle width direction relative to the bolt shaft (30B).

10. The straddled vehicle (1) according to any one of claims 1 to 9, further comprising a rear suspension unit (20) connected to the body frame (10) and the swing arm (8), wherein
the guard member (42) overlaps with the rear suspension unit (20) in a vehicle plan view.

11. The straddled vehicle (1) according to claim 1, further comprising a rear suspension unit (20) connected to the body frame (10) and the swing arm (8), wherein
the guard member (42) overlaps with the rear suspension unit (20) in a vehicle side view.

12. The straddled vehicle (1) according to claim 10, wherein
the guard member (42) overlaps with the rear suspension unit (20) in a vehicle side view.

13. The straddled vehicle (1) according to any one of claims 1 to 12, wherein
the chain guard (40) includes
a supporting shaft (45) supporting the guard member (42) such that the guard member (42) is rotatable, and
a bracket (44) to which the supporting shaft (45) is fixed, and
the bracket (44) is assembled to the fastening member (30).
